Europäisches Patentamt

European Patent Office

Office européen des brevets

(19)

(11) Veröffentlichungsnummer: **0 287 506 B1**

(12) # EUROPÄISCHE PATENTSCHRIFT

(45) Veröffentlichungstag der Patentschrift:
24.04.91 Patentblatt 91/17

(51) Int. Cl.⁵: **G01B 3/20, G01B 3/00**

(21) Anmeldenummer: 88810162.3

(22) Anmeldetag: 16.03.88

(54) Schieblehre.

(30) Priorität: 16.04.87 EP 87810242

(43) Veröffentlichungstag der Anmeldung:
19.10.88 Patentblatt 88/42

(45) Bekanntmachung des Hinweises auf die
Patenterteilung:
24.04.91 Patentblatt 91/17

(84) Benannte Vertragsstaaten:
AT CH DE FR GB LI SE

(56) Entgegenhaltungen:
BE-A- 429 752
CH-A- 297 059

(56) Entgegenhaltungen:
DE-A- 3 227 089
DE-A- 3 335 743
DE-A- 3 410 509
US-A- 1 641 266

(73) Patentinhaber: SCHNYDER & CIE
Rue Principale 43-45
CH-2735 Bévilard (CH)

(72) Erfinder: Wüst, Robert
Morépont 17
2800 Delemont (CH)

(74) Vertreter: Ardin, Pierre et al
PIERRE ARDIN & CIE 22, rue du Mont-Blanc
CH-1201 Genève (CH)

EP 0 287 506 B1

## Beschreibung

Die Erfindung bezieht sich auf eine Schieblehre, bestehend aus einer Schiene mit mindestens einem an ihr befestigten Messschnabel, einem auf der Schiene gleitenden, mit mindestens einem Messschnabel versehenen Schieber, einem im Schieber in zwei entgegengesetzten Messrichtungen beweglich gelagerten Drücker, mittels welchem der Schieber auf der Schiene in die zwei entgegengesetzte Richtungen verschoben werden kann, wobei der Drücker gegenüber dem Schieber in den zwei benannten Richtungen abgefedert ist.

Eine Schieblehre dieser Art ist im belgischen Patent N° 429752 beschrieben. Bei dieser Schieblehre, die Messungen in zwei entgegengesetzte Richtungen ermöglicht, ist im Schieber ein mittels Federn in ihm abgestützter und in entgegengesetzten Messrichtungen beweglicher Drücker vorgesehen. Bei einem auf ihn ausgeübten Druck bewegt sich dieser relativ zum Schieber, sobald an den Schnäbeln ein Messdruck auftritt. Diese Verschiebung wird durch einen auf dem Drücker befindlichen Zeiger gegenüber dem Schieber sichtbar gemacht. Werden Grenzmarken erreicht, so entsprechen diese Stellungen einem bestimmten Messdruck, welcher auf diese Weise optisch erfasst werden kann. Die bekannte Schieblehre ermöglicht somit eine wiederholbare Messung, da die Messkraft direkt gemessen werden und die Messung unter derselben Messkraft erfolgen kann. Das bekannte Instrument zeigt jedoch den Nachteil, dass beim Messen sowohl dem Messdruckwert, als auch dem eigentlichen Messwert Aufmerksamkeit geschenkt werden muss.

In den Offenlegungsschriften DE 33 35 743 und DE 34 10 509 werden Vorrichtungen zur Ausmessung leicht deformierbarer Objekte beschrieben. Diese Vorrichtungen erlauben Messungen in eine einzige Messrichtung und umfassen einen beweglichen Testarm, der über eine Feder und eine Sperrvorrichtung mit einer Tastplatte verbunden ist. Erreicht die Messkraft einen bestimmten Wert, wird die Sperrvorrichtung entgegen der Kraft der Feder eingeschaltet und verhindert ein weiteres Verschieben der Tastplatte und des Tastarmes. Die beschriebenen Vorrichtungen ermöglichen jedoch nur das Messen gemäss einer einzigen Messrichtung und sind daher für übliche Schieblehren nicht anwendbar, bei denen sowohl Aussen-, als auch Innenmessungen ausgeführt werden.

Der Erfindung liegt die Aufgabe zugrunde, diese Nachteile zu beseitigen und eine Schieblehre zu schaffen, die Messungen in entgegengesetzte Richtungen erlaubt, wobei beim Erreichen eines bestimmten Messdruckes der Schieber automatisch auf der Schiene festgeklemmt wird.

Diese Aufgabe wird erfindungsgemäss dadurch gelöst, dass die Schieblehre der genannten Art eine Feder aufweist, die unter einer vorbestimmten Vorspannung zwischen dem Schieber und dem Drücker gelagert ist, wobei diese Vorspannung grösser ist, als der Verschiebewiderstand des Schiebers auf der Schiene, so dass die Feder eine Relativverschiebung zwischen Drücker und Schieber beim freien Verschieben des Schiebers in den zwei benannten Richtungen verhindert, und dass die Schieblehre ein mit dem Drücker zusammenwirkendes Klemmelement zum Festklemmen des Schielers auf der Schiene aufweist, wobei der Drücker so mit der Jeder und dem Klemmelement zusammenwirket, dass beim Auftreten einer Messkraft auf den Schnabel des Schiebers in einer der benannten Richtungen, die Feder den Drücker soweit freigibt, dass er das Klemmelement betätigt.

Die erfindungsgemässe Schieblehre bietet die Vorteile, dass durch Verschieben in zwei entgegengesetzte Richtungen ein starker Druckanstieg am Drücker dem Gebraucher die gewünschte konstante Messkraft markiert. Somit können Aussen- und Innenmessungen bei Verhinderung von Überbeanspruchung des Messsystems vorgenommen werden, was sich wiederum vorteilhaft auf die Genauigkeit der Messung auswirkt.

Ein bevorzugtes Ausführungsbeispiel ist dadurch gekennzeichnet, dass die Feder eine Schraubenfeder ist und dass sowohl der Schieber, als auch der Drücker mit zumindest zwei mit der Feder zusammenwirkenden Anschlagsflächen versehen sind, wobei in Ruhestellung des Drückers jede der zwei Endflächen der Schraubenfeder mit einer der Anschlagsflächen des Schiebers und des Drückers in Berührung stehen.

Diese Anordnung erlaubt eine einfache Herstellung mit wenig Bestandteilen. Die einzige, zwischen den vier Anschlagsflächen vorgespannte Feder bewirkt weiterhin, dass die Ruhestellung zwischen dem Drücker und dem Schieber genau bestimmt ist.

Weitere vorteilhafte Ausgestaltungen der Erfindung ergeben sich aus den in den abhängigen Patentansprüchen angeführten Merkmalen und der nachfolgenden Beschreibung von drei Ausführungsbeispielen anhand der beigefügten Zeichnungen. Es bedeuten :

Figur 1 eine teilweise im Längsschnitt dargestellte Ausführungsform (Schnitt B-B in Figur 2),
Figur 2 einen Querschnitt A-A durch Figur 1,
Figur 3 eine Teilansicht der Figur 1, mit dem Drücker in Klemmstellung,
Figur 4 einen teilweisen Längsschnitt (D-D in Figur 5) durch eine zweite Ausführungsform,
Figur 5 einen Querschnitt C-C durch Figur 4,
Figur 6 einen Ausschnitt aus Figur 4, mit dem Drücker in Klemmstellung,
Figur 7 einen teilweisen Längsschnitt durch eine dritte Ausführungsform,
Figur 8 einen Querschnitt E-E durch Figur 7.

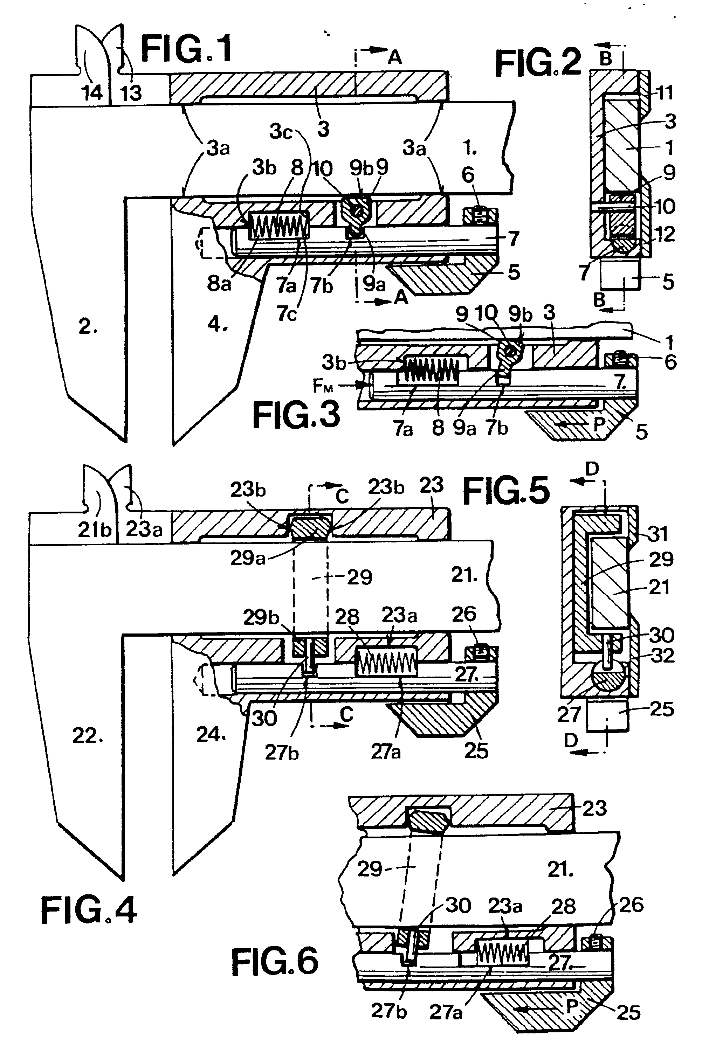

In den Figuren 1 bis 3 gleitet auf einer mit Messschnäbeln 2 und 14 ausgerüsteten Schiene 1 ein auf Lagern 3a gelagerter Schieber 3. In an sich bekannter Weise wird der Schieber 3 mit seinen Schnäbeln 4 und 13 durch Führungsleisten 11 und 12, die mit nicht gezeichneten Schrauben befestigt sind, auf der Schiene geführt. In Längsrichtung im Schieber 3 beweglich angeordnet befindet sich eine Achse 7, auf welcher ein Drücker 5 mittels einer Schraube 6 befestigt ist. Die Längsbewegung der Achse 7 im Schieber 3 ist durch sich gegenüberliegende Aussparungen 3b des Schiebers und 7a der Achse 7 begrenzt, in welchen die Schraubenfeder 8 abgestützt ist. Diese Aussparungen 3b und 7b bilden eine Kammer 8a für die Schraubenfeder 8, wobei diese Aussparungen 3b und 7b beidseitig mit den Endflächen der Schraubenfeder 8 zusammenwirkende Anschlagsflächen 3c und 7c aufweisen. Jede der beiden Endflächen der Schraubenfeder stehen in der Ruhestellung des Drückers (Fig. 1) mit einer Anschlagsfläche des Schiebers 3 und der Achse 7 des Drückers 5 in Berührung. Die Achse 7 enthält weiter eine Einkerbung 7b, in welche der Nocken 9a eines im Schieber 3 um einen Bolzen 10 drehbaren Klemmelementes 9 eingreift.

Soll der Schieber 3 z.B. zur Vornahme einer Aussenmessung auf der Schiene 1 verschoben werden, so wird auf den Drücker 5 in Verschieberichtung ein Druck P (Fig. 3) ausgeübt. Die Feder 8 ist vorgespannt und ihre Vorspannung ist grösser, als der Verschiebewiderstand des Schiebers, so dass sich die Achse 7 des Drückers während der Verschiebung des Schiebers 3 in diesem nicht bewegt. Dies ändert sich, sobald am Schnabel 4 des Schiebers 3 ein Messdruck $F_M$ auftritt. Um diesen Messdruck zu überwinden, muss nun ein erhöhter Druck P auf den Drücker 5 ausgeübt werden, womit die Vorspannung der Feder 8 überwunden wird. Die Achse 7 kann sich deshalb im Schieber 3 in Vorschubrichtung bewegen, was bewirkt, dass das Klemmelement 9 um seine im Schieber 3 angeordnete Achse 10 gedreht wird und nun mit seiner Fläche 9b auf die Schiene 1 drückt. Dadurch kann die Achse 7 des Drückers 5 nicht mehr weiter vorgeschoben werden und der auf den Schieber ausgeübte Druck bleibt auf die Federkraft der Feder 8 beschränkt, so dass keine Steigerung der Messkraft mehr eintreten kann. Gleichzeitig bewirkt die Klemmung einen zusätzlichen Druck auf die Lager 3a des Schiebers 3 aus, womit das Führungsspiel des Schiebers 3 auf der Schiene 1 aufgehoben und dadurch die Messgenauigkeit erhöht wird.

Es ist offensichtlich, dass der beschriebene Vorgang sinngemäss auf Innenmessungen angewendet werden kann, indem der Drücker 5 und die Achse 7 in Figur 1 nach rechts verschoben wird. Die besondere Ausgestaltung der in der Kammer 8a aufgenommenen Feder 8 erlauben somit Messungen in entgegengesetzten Richtungen.

Die in den Figuren 4 bis 6 gezeigte Ausführung erlaubt dem mit Messschnäbeln 23a und 24 versehenen Schieber 23, nachdem er durch den Drücker 25 in Messstellung gebracht wurde, sich unter dem eingestellten Messdruck besser dem Messobjekt anzupassen. Der auf der mit Messschnäbeln 22 und 21b versehenen Schiene 21 gleitende Schieber 23 wird durch Führungsleisten 31, 32 und nicht gezeichnete Schrauben auf der Schiene 21 geführt. Die in ihm gelagerte Achse 27 nimmt einen mittels einer Schraube 26 befestigten Drücker 25 auf. Die den Hub der Achse 27 begrenzende Feder 28 ist in Ausnahmen 23a des Schiebers 23 und 27a der Achse 27 aufgenommen. Im Schieber 23 ist ein U-förmiges Klemmelement 29 eingezetzt, welches am einen Ende 29a locker durch Anschläge 23b im Schieber 23 gehalten ist, am anderen Ende 29b mittels eines Stiftes 30 in eine Aussparung 27b der Achse 27 eingreift. Während des Vorschiebens kann sich diese Achse 27 im Schieber 23 nicht verschieben, da sie unter der Vorspannung der Feder 28 steht. Tritt aber am Schnabel 24 des Schiebers 23 eine Messkraft auf, so wird (Fig. 6) diese Vorspannung überwunden und bei erhöhtem Druck P auf den Drücker 25 erfolgt eine Winkelverstellung des Klemmelementes 29, welches sich dadurch auf der Schiene 21 festklemmt und so jeden weiteren Vorschub des Drückers 5 beendet. In dieser Stellung übt die Feder 28 einen bestimmten Druck auf den Schieber 23 aus, unter welchem sich dieser nun frei in die günstigste Messstellung einrichten kann. Wird, nach Beendigung der Messung, der Drücker 25 zurückbewegt, so stellt sich das Klemmelement 29 wiederum in seine Ausgangslage und gibt die Schiene 21 frei. Die Schieblehre kann in analoger Weise in entgegengesetzter Richtung für Innenmessungen angewendet werden.

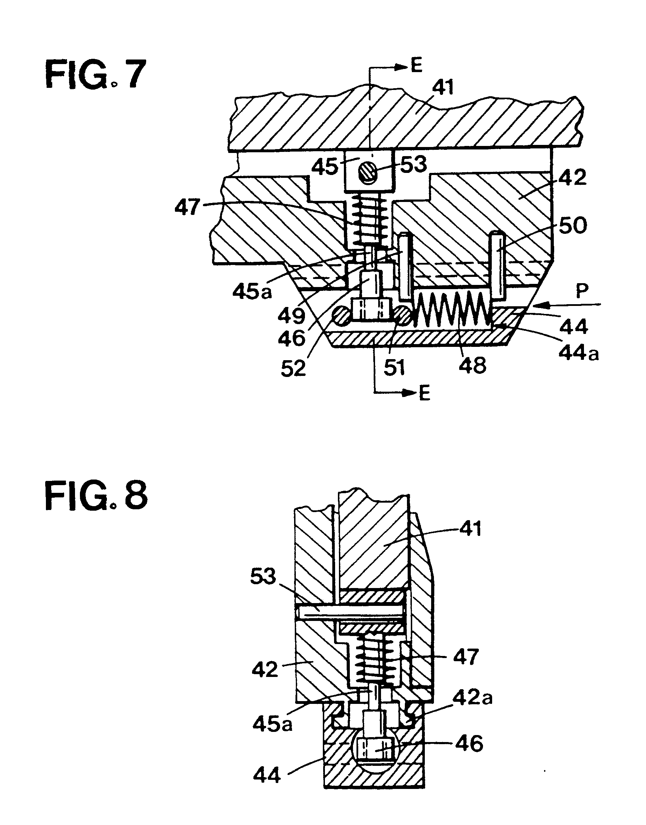

Die Figuren 7 und 8 zeigen eine weitere Ausführungsform der Erfindung : Der Schieber 42 ist mit einer T-förmigen Führung 42a versehen, in welcher ein Drücker 44 in den beiden entgegengesetzten Messrichtungen gleitend angeordnet ist. In seiner Stellung wird der Drücker 44 durch eine Feder 48 gehalten, welche einerseits an Bolzen 49 und 51, andererseits am Bolzen 50 und einer Anschlagfläche 44a des Drückers 44 anliegt.

Auf einem Stift 53 im Schieber 42 gelagert befindet sich ein Klemmkörper 45, versehen mit einem Schaft 45a, welcher mit einer Mutter 46 abgeschlossen ist. Im Drücker 44 befestigte Mitnehmerstifte 51 und 52 liegen an der Mutter 46 an. Eine im Schieber 42 abgestützte Feder 47 drückt den Klemmkörper 45 gegen die Schiene 41. Wird nun, z.B. bei Aussenmessungen, der Drücker 44 in Richtung P bewegt, so nimmt er vorerst einmal über die vorgespannte Feder 48 den Schieber 42 mit. Die Feder 48 ist dabei so bemessen, dass, solange der Schieber 42 frei auf der Schiene 41 bewegt wird, keine Relativverschiebung zwischen Drücker 44 und Schieber 42 auftritt. Dies ist erst der Fall, wenn der Schieber 42 durch das Messobjekt aufgehalten wird. Durch weiteres Stossen am Drücker 44 kann dieser nun die Kraft der Feder 48 überwinden und über den Stift 51 auf die Mutter 46 einwirken. Dadurch wird das Klemmstück 45 zum Kippen gebracht und, abgestützt auf dem Stift 53, kann es sich auf der Schiene 41 festklemmen, so dass die Bewegung des Schiebers 42 auf der Schiene 41 gehemmt wird. Beim Loslassen des Drückers 44 enthemmt sich das System wieder.

Auch bei diesem Beispiel kann die Aktion des Drückers 44 in beiden Messrichtungen (aussen und innen) erfolgen.

Die Erfindung ist natürlich nicht nur auf die dargestellten Ausführungsbeispiele beschränkt, sondern die letzteren können innerhalb der in den Patentansprüchen definierten Erfindung weitere Abänderungen erfahren. So können zum Beispiel die in den Figuren 1 bis 6 gezeigten Klemmelemente auch direkt vom Drücker ohne Achse 7 oder 27 betätigt werden. Das in den Figuren 7 und 8 dargestellte Klemmelement 45, 46 kann auch mit einer Achse gemäss den Figuren 1 bis 6 im Eingriff stehen.

**Ansprüche**

1. Schieblehre, bestehend aus einer Schiene (1 ; 21 ; 41) mit mindestens einem an ihr befestigten Messschnabel (2 ; 14 ; 22 ; 21b), einem auf der Schiene gleitenden, mit mindestens einem Messschnabel (4, 13 ; 24, 23a) versehenen Schieber (3 ; 23 ; 42), einem im Schieber in zwei entgegengesetzten Messrichtungen beweglich gelagerten Drücker (5 ; 25 ; 44), mittels welchem der Schieber auf der Schiene in die zwei entgegengesetzten Richtungen verschoben werden kann, wobei der Drücker gegenüber dem Schieber in den zwei benannten Richtungen abgefedert ist, **dadurch gekennzeichnet, dass** die Schieblehre eine Feder (8 ; 28 ; 48) aufweist, die unter einer vorbestimmten Vorspannung zwischen dem Schieber und dem Drücker gelagert ist, wobei diese Vorspannung grösser ist, als der Verschiebewiderstand des Schiebers auf der Schiene, so dass die Feder eine Relativverschiebung zwischen Drücker und Schieber beim freien Verschieben des Schiebers in den zwei benannten Richtungen verhindert, und dass die Schieblehre ein Klemmelement (9 ; 29 ; 45) zum Festklemmen des Schielers auf der Schiene aufweist, wobei der Drücker so mit der Feder und dem Klemmeelement zusammenwirkt, dass beim Auftreten einer Messkraft auf den Schnabel des Schiebers in einer der benannten Richtungen die Feder den Drücker soweit freigibt, dass er das Klemmelement betätigt.

2. Schieblehre gemäss Anspruch 1, **dadurch gekennzeichnet, dass** die Feder eine Schraubenfeder ist und dass sowohl der Schieber, als auch der Drücker mit zumindest zwei mit der Feder zusammenwirkenden Anschlagsflächen (3c, 7c) versehen sind, wobei in Ruhestellung des Drückers jede der zwei Endflächen der Schraubenfeder mit einer der Anschlagsflächen des Schiebers und des Drückers in Berührung stehen.

3. Schieblehre gemäss Anspruch 2, **dadurch gekennzeichnet, dass** im Schieber eine zur Messrichtung parallel verschiebbare Achse (7 ; 27) vorgesehen ist, auf welcher der Drücker befestigt ist.

4. Schieblehre gemäss Anspruch 3, **dadurch gekennzeichnet, dass** die Achse und der Schieber sich gegenüberliegende, derart ausgebildete Aussparungen aufweisen, dass sie zusammen eine Kammer (8a) für die Schraubenfeder bilden, wobei die Aussparungen beidseitig mit den Endflächen der Schraubenfeder zusammenwirkende Anschlagsflächen aufweisen.

5. Schieblehre gemäss Anspruch 1 oder 2, **dadurch gekennzeichnet, dass** der Drücker in Führungsnuten (42a) des Schiebers in Messrichtung beweglich aufgenommen ist.

6. Schieblehre gemäss Anspruch 3 oder 5, **dadurch gekennzeichnet, dass** das Klemmelement (9) aus einem im Schieber (3) gelagerten Hebel besteht, welcher einerseits eine an der Schiene anliegende Fläche (9b) aufweist, und andererseits in eine Aussparung (7b) in der Achse (7) oder des Drückers (5) eingreift, derart, dass durch die Verstellung der Achse oder des Drückers relativ zum Schieber das Klemmelement gedreht wird und sich dadurch auf der Schiene (1) festklemmt.

7. Schieblehre gemäss Anspruch 3 oder 5, **dadurch gekennzeichnet, dass** das Klemmelement (29) U-förmig um die Schiene (21) herumgreift, wobei seine beiden Stege mit Flächen unter wenig Spiel an den Führungsflächen der Schiene anliegen, und dass das Klemmelement einerseits beweglich im Schieber (23) abgestützt ist, andererseits in die Achse (27) oder den Drücker (25) derart eingreift, dass eine Längsbewegung der Achse oder des Drückers eine winklige Verstellung des Klemmelementes relativ zur Schiene bewirkt und es dadurch auf dieser festklemmt.

8. Schieblehre gemäss Anspruch 3 oder 5, **dadurch gekennzeichnet, dass** das Klemmelement (45) einen senkrecht zur Schiene (41) stehende Bolzen aufweist, welcher an seinem Ende in den Drücker (44) oder die Achse eingreift, wobei das Klemmelement mittels einer im Schieber abgestützten Feder (47) an die Schiene gedrückt wird.

**Claims**

1. Slide caliper, consisting of a beam (1, 21, 41) with at least one measuring jaw (2, 14, 22, 21b) mounted thereto, a slide (3, 23, 42) sliding along the beam and provided with at least one measuring jaw (4, 13, 24, 23a), a pusher (5, 25, 44) supported in the slide to be movable in two opposite measuring directions, by means of which the slide can be shifted on the beam in the two opposite directions, wherein the pusher is resiliently supported with respect to the slide in the two aforementioned directions, **characterized** in that the slide caliper comprises a spring (8, 28, 48) supported under a predetermined bias between the slide and the pusher, this bias being larger than the displacement resistance of the slide on the beam, so that the spring prevents a relative displacement between the pusher and the slide during the free displacement of the slide in the two aforementiond directions, and that the slide caliper includes a clamping element (9, 29, 45) in order to clamp the slide to the beam, wherein the pusher cooperates in such a manner with the spring and the clamping element, that upon the occurrence of a measuring force exerted on the jaw of the slide in one of the aforementioned directions, the spring releases the pusher to such an extent that the latter operates the clamping element.

2. Slide caliper according to claim 1, **characterized** in that the spring is a coil spring and that the slide as well as the pusher are provided with at least two stop faces (3c, 7c) cooperating with the spring, wherein, in the rest position of the pusher, each of the two end faces of the coil spring is in contact with one of the stop faces of the slide and of the pusher.

3. Slide caliper according to claim 2, **characterized** in that an axle (7, 27) displaceable in parallel to the measuring direction is provided in the slide, the pusher being mounted on this axle.

4. Slide caliper according to claim 3, **characterized** in that the axle and the pusher have mutually opposed recesses fashioned in such a way that they form jointly a chamber (8a) for the coil spring, wherein the recesses have on both sides stop faces cooperating with the end faces of the coil spring.

5. Slide caliper according to claim 1 or 2, **characterized** in that the pusher is accomodated movably in the measuring direction in guide grooves (42a) of the slide.

6. Slide caliper according to claim 3 or 5, **characterized** in that the clamping element (9) consists of a lever supported in the slide (3), this lever having, on the one hand, a surface engages (9b) in contact with the beam and, on the other hand, engages into a recess (7b) in the axle (7) or in the pusher (5) in such a way that, by the movement of the axle or of the pusher relatively to the slide, the clamping element is rotated and is thereby clamped fast to the beam (1).

7. Slide caliper according to claim 3 or 5, **characterized** in that the clamping element (29) extends in a U-shape around the beam (21), the two legs thereof being in contact, with surfaces under little clearance, with the guide faces of the beam, and that the clamping element, on the one hand, is movably supported in the slide (23), on the other hand engaging into the axle (27) or the pusher (25) in such a way that longitudinal movement of the axle or of the pusher causes an angular displacement of the clamping element relatively to the beam, whereby the clamping element is clamped fixedly to the beam.

8. Slide caliper according to claim 3 or 5, **characterized** in that the clamping element (45) has a shank oriented perpendicularly to the beam (41), which shank engages, at its end, into the pusher (44) or the axle, wherein the clamping element is urged against the beam by means of a spring (47) supported in the slide.

## Revendications

1. Pied à coulisse comprenant un rail (1, 21, 41) avec au moins un bec de mesure (2, 14, 22, 21b) fixé sur ce rail, un curseur (3, 23, 42) coulissant sur le rail et muni d'au moins un bec de mesure (4, 13, 24, 23a), un poussoir (5, 25, 44) monté de façon mobile suivant deux directions de mesure opposées dans le curseur, avec lequel le curseur peut être déplacé sur le rail dans les deux directions opposées, le poussoir étant monté de façon élastique par rapport au curseur suivant lesdites deux directions, **caractérisé** en ce que le pied à coulisse comporte un ressort (8, 28, 48), qui est disposé avec une précontrainte prédéterminée entre le curseur et le poussoir, cette précontrainte étant plus grande que le frottement de déplacement du curseur sur le rail, de façon que le ressort empêche un déplacement relatif entre le poussoir et le curseur lors du déplacement libre du curseur dans lesdites deux directions et en ce que le pied à coulisse comporte un élément de serrage (9, 29, 45) pour bloquer le curseur sur le rail, le poussoir coopérant avec le ressort et l'élément de serrage de telle manière que, lors de l'apparition d'une force de mesure sur le bec du curseur dans une desdites directions, le ressort libère le poussoir de façon qu'il actionne l'élément de serrage.

2. Pied à coulisse selon la revendication 1, **caractérisé** en ce que le ressort est un ressort hélicoïdal et en ce qu'aussi bien le curseur que le poussoir comportent au moins deux surfaces d'appui (3c, 7c) coopérant avec le ressort, chacune des deux faces terminales du ressort hélicoïdal étant en contact avec une des surfaces d'appui du curseur et du poussoir dans la position de repos du poussoir.

3. Pied à coulisse selon la revendication 2, **caractérisé** en ce qu'un arbre (7, 27) coulissant parallèlement à la direction de mesure est prévu dans le curseur, le poussoir étant monté sur cet arbre.

4. Pied à coulisse selon la revendication 3, **caractérisé** en ce que l'arbre et le curseur comprennent des évidements situés l'un en face de l'autre et conformés de façon à constituer conjointement une chambre (8a) pour le ressort hélicoïdal, les évidements comportant des deux côtés des surfaces d'appui coopérant avec les faces terminales du ressort hélicoïdal.

5. Pied à coulisse selon la revendication 1 ou 2, **caractérisé** en ce que le poussoir est disposé de façon mobile suivant la direction de mesure dans des rainures de guidage (42a).

6. Pied à coulisse selon la revendication 3 ou 5, **caractérisé** en ce que l'élément de serrage (9) est constitué par un levier monté dans le curseur (3), le levier présentant d'une part une surface (9b) en position adjacente avec le rail et s'engageant d'autre part dans une entaille (7b) de l'arbre (7) ou du poussoir (5), de telle manière que par le déplacement de l'arbre ou du poussoir par rapport au curseur l'élément de serrage subit une rotation et qu'il se bloque ainsi sur le rail (1).

7. Pied à coulisse selon la revendication 3 ou 5, **caractérisé** en ce que l'élément de serrage (29) se place en forme de U autour du rail (21), ses deux branches étant en position adjacente avec un faible jeu par rapport aux surfaces de guidage du curseur, et en ce que l'élément de serrage est d'une part monté de façon mobile dans le curseur (23) et d'autre part engrené de telle manière dans l'arbre (27) ou le poussoir (25) qu'une translation longitudinale de l'arbre ou du poussoir provoque un déplacement angulaire de l'élément de serrage par rapport au rail et le bloque sur ce dernier.

8. Pied à coulisse selon la revendication 3 ou 5, **caractérisé** en ce que l'élément de serrage (45) présente une tige disposée perpendiculairement au rail (41), cette tige s'engrenant à son extrémité avec le poussoir (44) ou l'arbre, l'élémént de serrage étant sollicité contre le rail par un ressort (47) prenant appui sur le curseur.

FIG.1

FIG.2

FIG.3

FIG.4

FIG.5

FIG.6

# FIG. 7

# FIG. 8